(19) Europäisches Patentamt
European Patent Office
Office européen des brevets

(11) **EP 4 263 703 B1**

(12) **EUROPEAN PATENT SPECIFICATION**

(45) Date of publication and mention
of the grant of the patent:
**07.08.2024 Bulletin 2024/32**

(21) Application number: **21834802.7**

(22) Date of filing: **10.12.2021**

(51) International Patent Classification (IPC):
*C08L 23/12* (2006.01)    *C08L 23/14* (2006.01)
*C08L 23/08* (2006.01)    *B60R 19/03* (2006.01)

(52) Cooperative Patent Classification (CPC):
(C-Sets available)
**C08L 23/12; B60R 19/03; C08L 2207/02**    (Cont.)

(86) International application number:
**PCT/EP2021/085221**

(87) International publication number:
**WO 2022/128795 (23.06.2022 Gazette 2022/25)**

(54) **POLYMER COMPOSITION WITH HIGH GLOSS, LOW SHRINKAGE AND HIGH IMPACT RESISTANCE**

POLYMERZUSAMMENSETZUNG MIT HOHEM GLANZ, GERINGER SCHRUMPFUNG UND HOHER SCHLAGZÄHIGKEIT

COMPOSITION DE POLYMÈRE À HAUTE BRILLANCE, À FAIBLE RÉTRÉCISSEMENT ET À RÉSISTANCE ÉLÉVÉE AUX CHOCS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2020 EP 20215372**

(43) Date of publication of application:
**25.10.2023 Bulletin 2023/43**

(73) Proprietor: **SABIC Global Technologies B.V.
4612 PX Bergen op Zoom (NL)**

(72) Inventor: **VAN BEEK, Dimphna Johanna Maria
6160 GA Geleen (NL)**

(74) Representative: **Sabic Intellectual Property Group
Sabic Intellectual Property Department
P.O. Box 3008
6160 GA Geleen (NL)**

(56) References cited:
**EP-A1- 2 599 829        EP-A1- 2 915 846
WO-A1-2015/091151**

(52) Cooperative Patent Classification (CPC): (Cont.)

C-Sets
**C08L 23/12, C08L 23/0815, C08L 23/12,
C08L 23/14, C08L 23/14**

**Description**

The present invention relates to a polymer composition comprising a first heterophasic propylene copolymer, a second heterophasic propylene copolymer and an ethylene based elastomer. The present invention further relates to a process for the preparation of said polymer composition. The present invention further relates to an automotive part comprising such polymer composition.

Due to the nature of polypropylene, it is desired in automotive industry that a bumper is made of a propylene based polymer composition with low shrinkage, such bumper is known in the art, e.g. WO2011144705A1 discloses a multicomponent polypropylene polymer, injection moulded articles made by said multicomponent polypropylene polymer show superior scratch resistance and especially low shrink anisotropy; US9023935B2 discloses a composition comprising a polypropylene-based resin and a polyethylene-based resin, said composition having an excellent balance of properties, particularly high stiffness and good impact strength; WO2015091151A1 discloses a polyolefin composition comprising a first and a second heterophasic propylene copolymer, which can be used in the automotive industry; EP2599829A1 discloses a heterophasic propylene copolymer composition which may be used for producing bumpers.

Recent development in automotive industry also leads to the trend to have a bumper with higher gloss.

Hence there is still a need for an automotive bumper made of a polymer composition with low shrinkage, high gloss while keeping the high impact resistance.

In the context of the present invention, "low shrinkage" means that the polymer composition has an average shrinkage value of lower than 0.93 % wherein the average shrinkage value is measured according to to ISO294-4:2018 24h after injection, condition temperature is 23°C. "high gloss" means the polymer composition has a gloss value at 20° of at least 55 wherein gloss is measured according to ISO2813:2014. "High impact resistance" means that the polymer composition has an impact resistance of at least 50 kJ/m2 at 23°C according to ISO180:2000

This need is satisfied by a polymer composition comprising a first heterophasic propylene copolymer (a), a second heterophasic propylene copolymer (b) and an ethylene based elastomer, wherein the amount of the first heterophasic propylene copolymer (a) is in the range from 23.1 to 73.7 wt% based on the total amount of the polymer composition, wherein the amount of the second heterophasic propylene copolymer (b) is in the range from 21.2 to 64.5 wt% based on the total amount of the polymer composition, wherein the amount of the ethylene based elastomer is in the range from 16.9 to 27.6 wt% based on the total amount of the polymer composition,

wherein the first heterophasic propylene copolymer (a) comprises:

- from 65 to 81 wt% of a propylene polymer (a1),

- from 19 to 35 wt% of an ethylene-$\alpha$-olefin copolymer (a2), wherein the moiety of $\alpha$-olefin in the ethylene-$\alpha$-olefin copolymer (a2) is derived from at least one $\alpha$-olefin having 3 to 20 carbon atoms,

wherein the MFI of the first heterophasic propylene copolymer (a) is in the range from 10 to 100 dg/min as determined according to ISO1133-1:2011 at 230°C with 2.16 kg load,

wherein the xylene soluble part of the second heterophasic propylene copolymer (b) is in the range from 12 to 27 wt% as determined by ISO16152:2005 based on the total amount of the second heterophasic propylene copolymer (b), where in the intrinsic viscosity of the xylene soluble part of the second heterophasic propylene copolymer (b) is in the range from 2.9 to 4.6 dl/g as measure according to ISO1628-1:2009 in decalin at 135 °C; wherein the MFI of the second heterophasic propylene copolymer (b) is in the range from 5.6 to 65 dg/min as determined according to ISO1133-1:2011 at 230°C with 2.16 kg load,

wherein the density of the ethylene based elastomer is in the range from 0.868 to 0.943 g/cm3 as determined according to ASTM D792-13.

The inventor of the present invention surprisingly found that an automotive bumper made of the polypropylene composition has low shrinkage, high gloss while keeping the high impact resistance.

First heterophasic propylene copolymer (a)

The first heterophasic propylene copolymer (a) comprises a first propylene polymer (a1) as matrix and a first ethylene-$\alpha$-olefin copolymer (a2) as dispersed phase.

The amount of the first propylene polymer (a1) is in the range from 65 to 81 wt%, preferably from 70 to 75 wt% based on the total amount of the first heterophasic propylene copolymer (a).

The first propylene polymer (a1) in the first heterophasic propylene copolymer (a) can be a propylene homopolymer or/and a propylene-$\alpha$-olefin copolymer wherein the $\alpha$-olefin has 2 or 4 to 20 carbon atoms, for example the propylene-$\alpha$-olefin can be a propylene-ethylene copolymer or a propylene-butene copolymer. Preferably the first propylene polymer (a1) in the first heterophasic propylene copolymer (a) is a propylene homopolymer.

The MFI of the first propylene polymer (a1) in the first heterophasic propylene copolymer (a) is preferably in the range from 20 to 150 dg/min, preferably from 50 to 100 dg/min, more preferably from 60 to 85 dg/min as measured according to ISO1133-1:2011 at 230 °C with a 2.16 kg load.

The amount of the first ethylene-$\alpha$-olefin copolymer (a2) is in the range from 19 to 35 wt%, preferably from 25 to 30 wt% based on the total amount of the first heterophasic propylene copolymer (a).

In the first heterophasic propylene copolymer (a), the amount of the moiety derived from ethylene is preferably in the range from 55 to 68 wt% based on the total amount of the first ethylene-$\alpha$-olefin copolymer (a2).

The moiety of $\alpha$-olefin in the first ethylene-$\alpha$-olefin copolymer (a2) in the first heterophasic propylene copolymer (a) is derived from at least one $\alpha$-olefin having 3 to 20 carbon atoms, for example the first ethylene-$\alpha$-olefin copolymer (a2) can be an ethylene-propylene copolymer, for example the first ethylene-$\alpha$-olefin copolymer (a2) can be an ethylene-butene copolymer, for example the first ethylene-$\alpha$-olefin copolymer (a2) can be an ethylene-hexene copolymer, for example the first ethylene-$\alpha$-olefin copolymer (a2) can be an ethylene-octene copolymer, for example the first ethylene-$\alpha$-olefin copolymer (a2) can be an ethylene-propylene-butene copolymer, for example the first ethylene-$\alpha$-olefin copolymer (a2) can be an ethylene-propylene-hexene copolymer. Preferably the first ethylene-$\alpha$-olefin copolymer (a2) in the first heterophasic propylene copolymer (a) is an ethylene-propylene copolymer.

Preferably the MFI of the first heterophasic propylene copolymer (a) is in the range from 10 to 100 dg/min, preferably from 15 to 80 dg/min, more preferably 23 to 65 dg/min, most preferably from 30 to 50 dg/min, as determined according to ISO1133-1:2011 at 230 °C with a 2.16 kg load.

The first heterophasic propylene copolymer (a) can be divided into a first xylene-soluble portion (First CXS) and a first xylene-insoluble portion (First CXI). The amount of the xylene-soluble portion (First CXS) of the first heterophasic propylene copolymer (a) is in the range from 10 to 27 wt%, preferably from 15 to 23 wt% based on the total amount of the first heterophasic propylene copolymer (a) as determined according to ISO16152:2005. The amount of the first xylene-insoluble portion based on the total amount of the first heterophasic propylene copolymer is calculated by the following equation:

$$\text{First CXI} = 100 \text{ wt\%} - \text{First CXS}$$

The intrinsic viscosity of the first xylene-insoluble part (First CXI) of the first heterophasic propylene copolymer (a) $IV_{\text{First CXI}}$ is in the range from 1.0 to 2.0 dl/g, more preferably from 0.8 to 1.6 dl/g, more preferably from 1.1 to 1.5 dl/g, even more preferably from 1.2 to 1.4 dl/g as measured according to ISO1628-3:2010.

The intrinsic viscosity of the first xylene-soluble part (First CXS) of the first heterophasic propylene copolymer (a) $IV_{\text{First CXS}}$ is in the range from 1.7 to 3.1 dl/g, more preferably from 1.9 to 2.8 dl/g, even more preferably from 2.0 to 2.5 dl/g as measured according to ISO1628-1:2009.

The first heterophasic propylene copolymer (a) is preferably a non-visbroken heterophasic propylene copolymer. The term non-visbroken is known in the art, yet for the avoidance of doubt it means that the materials was not treated such as to modify the molecular weight and/or the molecular weight distribution of the polymer directly after polymerisation. In other words, non-visbroken polymers are not treated with peroxides, radiation, or any other initiating source for chain breaking reactions to occur. An advantage of non-visbroken polypropylenes over visbroken polypropylenes is that the former generally suffer less from the release of low molecular weight materials, such materials inherently being produced upon visbreaking and is not desired for automitve application. For the avoidance of doubt, the term reactor grade indicates that the copolymer is non-visbroken. The first heterophasic propylene copolymer (a) is preferably a reactor grade heterophasic propylene copolymer.

The process to produce the first heterophasic propylene copolymer (a) is known in the art. Preferably the first heterophasic propylene copolymer (a) is produced in a sequential polymerization process comprising at least two reactors, more preferably the polypropylene of the present invention is produced in a sequential polymerization process comprising at least three reactors.

The catalyst used in the preparation of the first heterophasic propylene copolymer (a) is also know in the art, for example Ziegler-Natta catalyst, metallocene catalyst. Preferably the catalyst used to produce the first heterophasic propylene copolymer is free of phthalate, for example the catalyst comprises compounds of a transition metal of Group 4 to 6 of IUPAC, a Group 2 metal compound and an internal donor wherein said internal donor is a compound selected from optionally substituted malonates, maleates, succinates, glutarates, cyclohexene-1,2-dicarboxylates, benzoates, citraconate and derivatives and/or mixtures thereof.

For example the catalyst used in the preparation of the first heterophasic propylene copolymer (a) is a Ziegler-Natta catalyst comprising a procatalyst, at least one external donor, a co-catalyst and an optional internal donor wherein the external electron donor is chosen from the group consisting of a compound having a structure according to Formula III $(R^{90})_2$N-Si$(OR^{91})_3$ , a compound having a structure according to Formula IV: $(R^{92})$Si$(OR^{93})_3$ and mixtures thereof, wherein each of $R^{90}$, $R^{91}$, $R^{92}$ and $R^{93}$ groups are each independently a linear, branched or cyclic, substituted or unsubstituted alkyl having between 1 and 10 carbon atoms, preferably a linear unsubstituted alkyl having between 1 and 8 carbon atoms, preferably ethyl, methyl or n-propyl.

In one embodiment, $R^{90}$ and $R^{91}$ are each ethyl (compound of Formula III is diethylaminotriethoxysilane, DEATES). In another embodiment, $R^{92}$ is n-propyl and $R^{93}$ are each ethyl (compound of Formula IV is n-propyl triethoxysilane, nPTES) or in another embodiment $R^{92}$ is n-propyl and $R^{93}$ are each methyl (compound of Formula IV is n-propyl trimethoxysilane, nPTMS).

Preferably, the heterophasic propylene copolymer of the invention is is prepared by a catalyst system comprising a Ziegler-Natta catalyst and at least one external electron donor chosen from the group of a compound having a structure according to Formula III $(R^{90})_2$N-Si$(OR^{91})_3$, a compound having a structure according to Formula IV: $(R^{92})$Si$(OR^{93})_3$ and mixtures thereof.

A "co-catalyst" is a term well-known in the art in the field of Ziegler-Natta catalysts and is recognized to be a substance capable of converting the procatalyst to an active polymerization catalyst. Generally, the co-catalyst is an organometallic compound containing a metal from group 1, 2, 12 or 13 of the Periodic System of the Elements (Handbook of Chemistry and Physics, 70th Edition, CRC Press, 1989- 1990). The co-catalyst may include any compounds known in the art to be used as "co-catalysts", such as hydrides, alkyls, or aryls of aluminum, lithium, zinc, tin, cadmium, beryllium, magnesium, and combinations thereof. The co-catalyst may be a hydrocarbyl aluminum co-catalyst, such as triisobutylaluminum, trihexylaluminum, diisobutylaluminum hydride, dihexylaluminum hydride, isobutylaluminum dihydride, hexylaluminum dihydride, diisobutylhexylaluminum, isobutyl dihexylaluminum, trimethylaluminum, triethylaluminum, tripropylaluminum, triisopropylaluminum, tri-n-butylaluminum, trioctylaluminum, tridecylaluminum, tridodecylaluminum, tribenzylaluminum, triphenylaluminum, trinaphthylaluminum, and tritolylaluminum. In an embodiment, the cocatalyst is selected from triethylaluminum, triisobutylaluminum, trihexylaluminum, diisobutylaluminum hydride and dihexylaluminum hydride. More preferably, trimethylaluminium, triethylaluminium, triisobutylaluminium, and/or trioctylaluminium. Most preferably, triethylaluminium (abbreviated as TEAL). The co-catalyst can also be a hydrocarbyl aluminum compound such as tetraethyl-dialuminoxane, methylaluminoxane, isobutylaluminoxane, tetraisobutyl-dialuminoxane, diethyl-aluminumethoxide, diisobutylaluminum chloride, methylaluminum dichloride, diethylaluminum chloride, ethylaluminum dichloride and dimethylaluminum chloride, preferably TEAL.

For example, the procatalyst may be prepared by a process comprising the steps of providing a magnesium-based support, contacting said magnesium-based support with a Ziegler-Natta type catalytic species, an internal donor, and an activator, to yield the procatalyst. For example, the Examples of US 5,093,415 of Dow discloses an improved process to prepare a procatalyst. Preferably, the procatalyst is a chemical compound comprising titanium.

In the context of the present invention, the molar ratio between Si and Ti element in the catalyst system is preferably in the range from 0.1 to 40, preferably from 0.1 to 20, even more preferably from 1 to 20 and most preferably from 2 to 10. Preferably the molar ratio between Al and Ti element in the catalyst system is in the range from 5 to 500, preferably from 15 to 200, more preferably from 30 to 160, most preferably from 50 to 140.

In one embodiment, the molar ratio between Si and Ti element is the molar ratio between the external donor and the procatalyst.

In one embodiment, the molar ratio between Al and Ti element is the molar ratio between the co-catalyst and the procatalyst.

Second heterophasic propylene copolymer (b)

The second heterophasic propylene copolymer (b) preferably comprises a second propylene polymer (b1) as matrix and a second ethylene-$\alpha$-olefin copolymer (b2) as dispersed phase.

The amount of the second propylene polymer (b1) is preferably in the range from 65 to 81 wt%, preferably in the range from 70 to 76 wt% based on the total amount of the second heterophasic propylene copolymer (b).

The second propylene polymer (b1) in the second heterophasic propylene copolymer (b) can be a propylene homopolymer or/and a propylene-$\alpha$-olefin copolymer wherein the $\alpha$-olefin has 2 or 4 to 20 carbon atoms, for example the propylene-$\alpha$-olefin can be a propylene-ethylene copolymer or a propylene-butene copolymer. Preferably the second propylene polymer (b1) in the second heterophasic propylene copolymer (b) is a propylene homopolymer.

The MFI of the second propylene polymer (b1) in the second heterophasic propylene copolymer (b) is preferably in the range from 20 to 150 dg/min, preferably from 50 to 100 dg/min, more preferably from 60 to 90 dg/min as measured according to ISO1133-1:2011 at 230 °C with a 2.16 kg load.

The amount of the second ethylene-$\alpha$-olefin copolymer (b2) is preferably in the range from 19 to 35 wt%, preferably from 24 to 30 wt% based on the total amount of the second heterophasic propylene copolymer (b).

In the second heterophasic propylene copolymer (b), the amount of the moiety derived from ethylene is preferably in the range from 55 to 68 wt% based on the total amount of the second ethylene-α-olefin copolymer (b2).

The moiety of α-olefin in the second ethylene-α-olefin copolymer (b2) in the second heterophasic propylene copolymer (b) is preferably derived from at least one α-olefin having 3 to 20 carbon atoms, for example the second ethylene-α-olefin copolymer (b2) can be an ethylene-propylene copolymer, for example the second ethylene-α-olefin copolymer (b2) can be an ethylene-butene copolymer, for example the second ethylene-α-olefin copolymer (b2) can be an ethylene-hexene copolymer, for example the second ethylene-α-olefin copolymer (b2) can be an ethylene-octene copolymer, for example the second ethylene-α-olefin copolymer (b2) can be an ethylene-propylene-butene copolymer, for example the second ethylene-α-olefin copolymer (b2) can be an ethylene-propylene-hexene copolymer. Preferably the second ethylene-α-olefin copolymer (b2) in the second heterophasic propylene copolymer (b) is an ethylene-propylene copolymer.

The MFI of the second heterophasic propylene copolymer (b) is in the range from 5.6 to 65 dg/min, more preferably in the range from 7.1 to 53 dg/min, more preferably in the range from 10.3 to 39 dg/min, more preferably in the range from 12.5 to 27 dg/min, as determined according to ISO1133-1:2011 at 230 °C with a 2.16 kg load.

The second heterophasic propylene copolymer (b) can be divided into a second xylene-soluble part (Second CXS) and a second xylene-insoluble part (Second CXI). The amount of the second xylene-soluble part of the second heterophasic propylene copolymer (b) is in the range from 12 to 27 wt%, preferably in the range from 16 to 25 wt%, more preferably in the range from 18 to 23 wt% based on the total amount of the second heterophasic propylene copolymer (a) as determined according to ISO16152:2005.

The intrinsic viscosity of the second xylene-soluble part (Second CXS) of the second heterophasic propylene copolymer (b) $IV_{Second\ CXS}$ is in the range from 2.9 to 4.6 dl/g, more preferably from 3.5 to 4.4 dl/g, even more preferably from 3.8 to 4.2 dl/g as measured according to ISO1628-1:2009.

The second heterophasic propylene copolymer (b) is preferably a reactor grade heterophasic propylene copolymer.

The second heterophasic propylene copolymer (b) can be produced with process and catalyst known in the art.

In one embodiment, the second heterophasic propylene copolymer (b) is produced with the same process as the first heterophasic propylene copolymer (a).

In one embodiment, the second heterophasic propylene copolymer (b) is produced with the same catalyst as the first heterophasic propylene copolymer (a).

Ethylene based elastomer

The polymer composition according to the present invention comprises a ethylene based elastomer. The ethylene based elastomer is preferably an ethylene-α-olefin copolymer wherein the α-olefin has 3 to 20 carbon atoms, for example the ethylene-α-olefin copolymer is an ethylene-propylene copolymer, for example the ethylene-α-olefin copolymer is an ethylene-butene copolymer, for example the ethylene-α-olefin copolymer is an ethylene-hexene copolymer, for example the ethylene-α-olefin copolymer is an ethylene-octene copolymer or a combination thereof.

Preferably the ethylene based elastomer is an ethylene-butene copolymer or/and an ethylene-octene copolymer. More preferably the ethylene based elastomer is an ethylene-octene copolymer.

Preferably the amount of moiety derived from ethylene in the ethylene based elastomer is in the range from 45 to 90 wt%, preferably from 50 to 87 wt%, more preferably from 55 to 85 wt%, more preferably from 57 to 70 wt% based on the total amount of the ethylene based elastomer.

The ethylene based elastomer according to the present invention preferably has a shore A hardness in the range from 40 to 85, more preferably in the range from 51 to 79, more preferably in the range from 54 to 68 as measured according to ASTM D2240-15.

The density of the ethylene based elastomer according to the present invention is in the range from 0.868 to 0.943 g/cm3, preferably from 0.869 to 0.896 g/cm3, more preferably from 0.869 to 0.882 g/cm3, more preferably from 0.869 to 0.876 g/cm3 as measured according to ASTM D792-13.

The MFI of the ethylene based elastomer is preferably in the range from 0.20 to 20.0 dg/min, preferably from 1.3 to 14.3 dg/min, more preferably from 2.6 to 7.2 dg/min as measured according to ASTM D1238-13 with a 2.16 kg load at 190°C.

The ethylene based elastomer may be prepared using methods known in the art, for example by using a single site catalyst, i.e., a catalyst the transition metal components of which is an organometallic compound and at least one ligand of which has a cyclopentadienyl anion structure through which such ligand bondingly coordinates to the transition metal cation. This type of catalyst is also known as "metallocene" catalyst. Metallocene catalysts are for example described in U.S. Patent Nos. 5,017,714 and 5,324,820. The ethylene based elastomer may also be prepared using traditional types of heterogeneous multi-sited Ziegler-Natta catalysts.

Optional inorganic filler

The polymer composition according to the present invention may further comprise an inorganic filler.

Suitable examples of inorganic fillers include but are not limited to talc, calcium carbonate, wollastonite, barium sulfate, kaolin, glass flakes, laminar silicates (bentonite, montmorillonite, smectite) and mica.

For example, the inorganic filler is chosen from the group of talc, calcium carbonate, wollastonite, mica and mixtures thereof.

More preferably, the inorganic filler is talc. The mean particle size of talc (D50) of talc is preferably in the range from 0.1 to 10.2 micron, preferably from 0.3 to 8.1 micron, more preferably from 0.5 to 5.2 micron, even more preferably from 0.6 to 2.5 micron according to sedimentation analysis, Stockes' law (ISO 13317-3:2001).

Optional additives

The polymer composition according to the present invention may further contain additives, for instance nucleating agents and clarifiers, stabilizers, release agents, plasticizers, anti-oxidants, lubricants, anti-statics, cross linking agents, scratch resistance agents, high performance fillers, pigments and/or colorants, flame retardants, blowing agents, acid scavengers, recycling additives, anti-microbials, anti-fogging additives, slip additives, anti-blocking additives, polymer processing aids and the like. Such additives are well known in the art. The amount of the additives is preferably to be at most 5.0 wt%, preferably at most 4.5 wt%, preferably at most 4 wt%, more preferably at most 3.8 wt% based on the total amount of the polymer composition. The reason for the preference of the low amount of additives is that at this amount, additives do not have negative influence on the desired properties of the polymer composition according to the present invention.

Polymer composition

The polymer composition according to the present invention comprises said first heterophasic propylene copolymer (a), said second heterophasic propylene copolymer (b), ethylene based elastomer, optional inorganic filler and optional additives wherein the amount of the first heterophasic propylene copolymer (a) is in the range from 23.1 to 73.7 wt%, preferably from 28.3 to 54.8 wt%, preferably from 32.2 to 44.7 wt% based on the total amount of the polymer composition, wherein the amount of the second heterophasic propylene copolymer (b) is in the range from 21.2 to 64.5 wt%, preferably from 24.5 to 50.1 wt%, preferably from 27.2 to 40.1 wt% based on the total amount of the polymer composition.

The amount of the ethylene based elastomer is in the range from 16.9 to 27.6 wt%, more preferably in the range from 17.8 to 25.4 wt%, even more preferably in the range from 18.3 to 23.7 wt% based on the total amount of the polymer composition.

The total amount of the first heterophasic propylene copolymer (a), the second heterophasic propylene copolymer (b), ethylene based elastomer, the optional inoragnic filler and the optional additives is preferably at least 95 wt%, preferably at least 97 wt%, preferably at least 98.5 wt% and preferably at most 100 wt% based on the total amount of the polymer composition.

The amount of the inorganic filler is preferably at most 20 wt%, at most 16 wt%, more preferably at most 12 wt% based on the total amount of the polymer composition.

The MFI of the polymer composition is preferably in the range from 5 to 100 dg/min, preferably from 10 to 70 dg/min, more preferably from 15 to 50 dg/min, more preferably from 15 to 25 dg/min as measure according to ISO1133-1:2011 with a 2.16kg load at 230°C as in the preferred MFI range, the polymer composition has an optimal balance between impact performance and processability.

The polymer composition according to the present invention can for example be prepared in an extrusion process by melt-mixing the first heterophasic propylene copolymer (a), the ethylene based elastomer, the second heterophasic propylene copolymer (b), the optional inorganic filler and the optional additives in an extruder.

The present invention further relates to a process for the preparation of an article, preferably an automotive part, more preferably an automotive bumper, comprising the sequential steps of:

-   Providing the polymer composition according to the present invention obtained by extrusion;
-   Shaping the polymer composition according to the present invention in to the article, preferably by injection molding.

The present invention further relates to the use of the polymer composition according to the present invention in the preparation of an article, preferably an automotive part, for example an automotive interior part, for example an automotive exterior part, for example an automotive bumper.

The present invention further relates to an article, preferably injection molded article, more preferably injection molded automotive article obtained or obtainable by the process of the present invention, wherein the amount of the polymer composition according to the present invention is at least 95 wt%, preferably at least 98 wt% based on the total amount of the article.

The present invention further relates to an automotive bumper comprising the polymer composition according to the present invention, wherein the amount of the polymer composition according to the present invention is at least 95 wt%, preferably at least 98 wt% based on the total amount of the automotive bumper.

For the avoidance of any confusion, in the context of the present invention, the term "amount" can be understood as "weight"; "Melt flow index (MFI)" refers to the same physical property as "melt flow rate (MFR)".

It is noted that the invention relates to all possible combinations of features described herein, preferred in particular are those combinations of features that are present in the claims. It will therefore be appreciated that all combinations of features relating to the composition according to the invention; all combinations of features relating to the process according to the invention and all combinations of features relating to the composition according to the invention and features relating to the process according to the invention are described herein.

It is further noted that the term 'comprising' does not exclude the presence of other elements. However, it is also to be understood that a description on a product/composition comprising certain components also discloses a product/composition consisting of these components. The product/composition consisting of these components may be advantageous in that it offers a simpler, more economical process for the preparation of the product/composition. Similarly, it is also to be understood that a description on a process comprising certain steps also discloses a process consisting of these steps. The process consisting of these steps may be advantageous in that it offers a simpler, more economical process. When values are mentioned for a lower limit and an upper limit for a parameter, ranges made by the combinations of the values of the lower limit and the values of the upper limit are also understood to be disclosed.

The invention is now elucidated by way of the following examples, without however being limited thereto.

**Materials**

Polymer A, B and D are heterophasic propylene copolymers prepared in an Innovene™ process, wherein a sequential two-reactor setup was employed. Polypropylene homopolymers were produced in first reactor and propylene-ethylene copolymers were produced in the second reactor.

There were three component in the catalyst system in the polymerization process: A procatalyst, an external electron donor and a co-catalyst. The procatalyst was prepared according to the description in WO2016198344, page 36, "Procatalyst III" paragraph; The external electron donor used for Polymer A and B was di(iso-propyl) dimethoxysilane (DiPDMS), the external electron donor used for Polymer C and D was n-propyltriethoxysilane (nPTES); the co-catalyst was triethylaluminium.

The process condition of Polymer A, B and D are given in Table 1:

Table 1: Preparation condition of Polymer A, B and D

| Polymer | A | B | D |
|---|---|---|---|
| R1 Te (°C) | 66 | 66 | 69.5 |
| R1 Pr (Bar) | 24 | 24 | 24 |
| Al/Ti (mol/mol) | 135 | 135 | 135 |
| Si/Ti (mol/mol) | 10 | 10 | 10 |
| R1 H2/C3 (mol/mol) | 0.08 | 0.05 | 0.065 |
| R1 split (wt%) | 80 | 74 | 86 |
| R2 Te (°C) | 66 | 57 | 59 |
| R2 Pr (Bar) | 24 | 24 | 24 |
| R2 H2/C3 (mol/mol) | 0.132 | 0.005 | 0.0042 |
| R2 C2/C3 (mol/mol) | 0.63 | 0.33 | 0.31 |
| R2 split (wt%) | 20 | 26 | 14 |

In Table 1, R1 refers to the first reactor, R2 refers to the second reactor, Te refers to temperature, Pr refers to pressure, Al/Ti is the molar ratio of the co-catalyst to the procatalyst, Si/Ti is the molar ratio of the external donor to the procatalyst, H2/C3 is the molar ratio of hydrogen to propylene, C2/C3 is the molar ratio of ethylene to propylene, split is the amount of substance produced in R1 or R2 based on the amount of the total Polymer A or B or D respectively.

HDPE 80064 is an HDPE commercially available from SABIC with grade name HDPE M80064S having a density of 0.964 g/cm3 (ASTM D792-13) and an MFI of 8.0 g/10min (ASTM D1238-13, 2.16 kg, 190°C).

HDPE M200056 is an HDPE commercially available from having a density of 0.956 g/cm3 (ASTM D792-13) and an MFI of 20.0 g/10min (ASTM D1238-13, 2.16 kg, 190°C).

LDPE 1922 is a LDPE commercially available from SABIC with grade name LDPE 1922N0 having a density of 0.919 g/cm3 (ASTM D792-13) and an MFI of 22.0 g/10min (ASTM D1238-13, 2.16 kg, 190°C).

Engage 11527 is a polyolefin elastomer commercially available from Dow, having a density of 0.866 g/cm3 (ASTM D792-13), an MFI of 15 g/10 min (ASTM D1238-13, 2.16 kg, 190°C).

Engage 8200 is a polyolefin elastomer commercially available from Dow, having a density of 0.870 g/cm3 (ASTM D792-13), an MFI of 5.0 g/10 min (ASTM D1238-13, 2.16 kg, 190°C) and a shore A hardness of 66 (ASTM D2240-15).

Talc HTPultra 5c is an untrafine talc commercially available from IMI FABIC. The mean particle size of talc (D50) of Talc HTPultra 5c is 0.65 μm as measured according to sedimentation analysis, Stockes' law (ISO 13317-3:2001).

Additive package consist of 60 wt% color masterbatch, 20 wt% heat and process stabilizers, 10 wt% UV stabilizer, 10 wt% processing aid based on the total amount of the additive package.

**Sample preparation**

Compounding

Pellets of Examples were prepared by compounding the components in Table 3 in a KraussMaffei Berstorff ZE40A_UTX 43D twin-screw extruder with the following setting: 400 rpm screw speed, 150kg/h throught put, 38% torque, 235 °C as temperature and 13 bar as head pressure.

Specimens preparation

The specimens for ash content test was the pellets obtained in the compounding process. Other specimens for the measurement were prepared by injection molding. The dimensions of the specimens used in impact resistance and shrinkage measurement were defined in the norm; The dimensions of the specimens used in gloss measurement are 65*65*3.2 mm.

**Test method**

Melt flow index

Melt flow index (MFI) was measured according to ISO1133-1:2011 at 230°C with a 2.16kg load.

Weight percentage of the xylene-soluble part (CXS) and weight percentage of the xylene-insoluble part (CXI)

Weight percentage of the xylene-soluble part (CXS) of the heterophasic propylene copolymers was determined according to ISO16152:2005. Weight percentage of xylene-insoluble part (CXI) of the heterophasic propylene copolymers was calculated using the following equation:

$$CXI = 100 \text{ wt\%} - CXS$$

Both xylene-soluble and xylene-insoluble parts (CXS and CXI) obtained in this test were used in the intrinsic viscosity (IV) test.

Intrinsic viscosity (IV)

Intrinsic viscosity (IV) of CXS and CXI was determined according to ISO1628-1:2009 and ISO1628-3:2010 respectively in decalin at 135 °C.

Impact resistance

Impact resistance is determined according to Izod ISO180:2000 at 23°C and 0°C.

Tensile modulus

Tensile modulus was determined according to ISO527-1:2012 at 23°C.

Gloss

Gloss at 20° and 60° was determined according to ISO2813:2014.

Ash content

Ash content was determined according to ISO 3451-1:2019 (4h, 600°C).

Shrinkage

Average shrinkage was determined according to ISO294-4:2018 24h after injection, condition temperature was 23°C.

**Result**

Table 2 Properties of Polymer A, B and D

|  | Polymer A | Polymer B | Polymer D |
|---|---|---|---|
| MFI (g/10min) | 40 | 14 | 77 |
| Weight fraction matrix (wt%) | 80 | 74 | 86 |
| MFI matrix (g/10min) | 75 | 85 | 230 |
| CSX (wt%) | 18 | 22 | 14 |
| $IV_{CXS}$ (dl/g) | 2.2 | 4.0 | 5.3 |
| $IV_{CXI}$ (dl/g) | 1.3 | 1.4 | 1.3 |
| Reactor grade | Yes | Yes | Yes |

Table 3 Properties of PPc

|  | CE1 | CE2 | CE3 | CE4 | IE1 | IE2 | CE5 | CE6 | CE7 | CE8 |
|---|---|---|---|---|---|---|---|---|---|---|
| Polymer A (wt%) | 35.6 |  | 20 | 45.6 | 40.6 | 35.6 | 40.6 | 40.6 | 40.6 | 40.6 |
| Polymer B (wt%) |  | 30.6 | 55.6 | 30 | 30 | 30 | 30 | 30 | 30 | 30 |
| Polymer D (wt%) | 30 | 35 |  |  |  |  |  |  |  |  |
| Engage 11527 (wt%) |  |  |  |  |  |  |  | 20 |  |  |
| HDPE M200056 (wt%) |  |  |  |  |  |  |  |  |  | 20 |
| LDPE 1922 (wt%) |  |  |  |  |  |  |  |  | 20 |  |
| Engage 8200 (wt%) | 20 | 20 | 15 | 15 | 20 | 20 |  |  |  |  |
| HDPE M80064 (wt%) |  |  |  |  |  |  | 20 |  |  |  |
| Talc HTPultra 5c (wt%) | 10 | 10 | 5 | 5 | 5 | 10 | 5 | 5 | 5 | 5 |
| Additive package (wt%) | 4.4 | 4.4 | 4.4 | 4.4 | 4.4 | 4.4 | 4.4 | 4.4 | 4.4 | 4.4 |
| MFI (dg/min) | 34.7 | 25 | 17.6 | 22.7 | 20.9 | 19.8 | 21.7 | 23.6 | 22.7 | 24 |
| Impact resistance 23°C (kJ/m2) | 43.7 | 51.3 | 54.2 | 48.2 | 51.3 | 52.3 | 28.5 | 50 | 13.3 | 8.9 |
| Impact resistance 0°C (kJ/m2) | 17.7 | 45.3 | 48.2 | 22.2 | 45.2 | 43.7 | 8.6 | 41.5 | 7.2 | 5.2 |

(continued)

| | CE1 | CE2 | CE3 | CE4 | IE1 | IE2 | CE5 | CE6 | CE7 | CE8 |
|---|---|---|---|---|---|---|---|---|---|---|
| Gloss 20° | 52.1 | 51.6 | 49.4 | 47.6 | 57.6 | 56.2 | 27.7 | 45.4 | 48.2 | 44.9 |
| Gloss 60° | 77.1 | 77.1 | 76.4 | 75 | 80.5 | 79.5 | 57.2 | 72.5 | 73.8 | 71.8 |
| Average shrinkage (%) | 0.86 | 0.95 | 1.14 | 1.06 | 0.91 | 0.74 | 1.33 | 0.94 | 1.24 | 1.33 |

According to the information in Table 3, the polymer compositions of the invention as exemplified by IE 1 and 2 showed high gloss (>55 at 20°) while having a shrinkage value of lower than 0.93 and keeping the impact resistance at the same level.

**Claims**

1.  A polymer composition comprising a first heterophasic propylene copolymer (a), a second heterophasic propylene copolymer (b) and an ethylene based elastomer, wherein the amount of the first heterophasic propylene copolymer (a) is in the range from 23.1 to 73.7 wt% based on the total amount of the polymer composition, wherein the amount of the second heterophasic propylene copolymer (b) is in the range from 21.2 to 64.5 wt% based on the total amount of the polymer composition, wherein the amount of the ethylene based elastomer is in the range from 16.9 to 27.6 wt% based on the total amount of the polymer composition,

    wherein the first heterophasic propylene copolymer (a) comprises:

    - from 65 to 81 wt% of a propylene polymer (a1),
    - from 19 to 35 wt% of an ethylene-$\alpha$-olefin copolymer (a2), wherein the moiety of $\alpha$-olefin in the ethylene-$\alpha$-olefin copolymer (a2) is derived from at least one $\alpha$-olefin having 3 to 20 carbon atoms,

    wherein the MFI of the first heterophasic propylene copolymer (a) is in the range from 10 to 100 dg/min as determined according to ISO1133-1:2011 at 230°C with 2.16 kg load,
    wherein the xylene soluble part of the second heterophasic propylene copolymer (b) is in the range from 12 to 27 wt% as determined by ISO16152:2005 based on the total amount of the second heterophasic propylene copolymer (b), where in the intrinsic viscosity of the xylene soluble part of the second heterophasic propylene copolymer (b) is in the range from 2.9 to 4.6 dl/g as measure according to ISO1628-1:2009 in decalin at 135 °C; wherein the MFI of the second heterophasic propylene copolymer (b) is in the range from 5.6 to 65 dg/min as determined according to ISO1133-1:2011 at 230°C with 2.16 kg load,
    wherein the density of the ethylene based elastomer is in the range from 0.868 to 0.943 g/cm3 as determined according to ASTM D792-13.

2.  The polymer composition according to claim 1, wherein the MFI of the second heterophasic propylene copolymer (b) is in the range from 7.1 to 53 dg/min, preferably in the range from 10.3 to 39 dg/min, more preferably in the range from 12.5 to 27 dg/min, as determined according to ISO1133-1:2011 at 230 °C with a 2.16 kg load.

3.  The polymer composition according to claim 1 or 2 wherein the amount of the first heterophasic propylene copolymer (a) is in the range from 28.3 to 54.8 wt%, preferably from 32.2 to 44.7 wt% based on the total amount of the polymer composition.

4.  The polymer composition according to any one of the previous claims, wherein the amount of the second heterophasic propylene copolymer (b) is in the range from 24.5 to 50.1 wt%, preferably from 27.2 to 40.1 wt% based on the total amount of the polymer composition.

5.  The polymer composition according to any one of the previous claims, wherein the MFI of the first heterophasic propylene copolymer (a) is in the range from 15 to 80 dg/min, more preferably 23 to 65 dg/min, most preferably from 30 to 50 dg/min, as determined according to ISO1133-1:2011 at 230 °C with a 2.16 kg load.

6.  The polymer composition according to any one of the previous claims, wherein the MFI of the ethylene based elastomer is in the range from 0.20 to 20.0 dg/min, preferably from 1.3 to 14.3 dg/min, more preferably from 2.6 to 7.2 dg/min as measured according to ASTM D1238-13 with a 2.16 kg load at 190°C.

7. The polymer composition according to any one of the previous claims, wherein the ethylene based elastomer is an ethylene-butene copolymer or/and an ethylene-octene copolymer, preferably the ethylene based elastomer is an ethylene-octene copolymer.

8. The polymer composition according to any one of the previous claims, wherein the MFI of the polymer composition is in the range from 5 to 100 dg/min, preferably from 10 to 70 dg/min, more preferably from 15 to 50 dg/min, more preferably from 15 to 25 dg/min as measure according to ISO1133-1:2011 with a 2.16kg load at 230°C

9. The polymer composition according to any one of the previous claims, wherein the polymer composition further comprises an inorganic filler, wherein the amount of the inorganic filler is at most 20 wt%, at most 16 wt%, more preferably at most 12 wt% based on the total amount of the polymer composition.

10. The polymer composition according to claim 9, wherein the inorganic filler is talc.

11. The polymer composition according to any one of the previous claims, wherein the polymer composition further comprises additives, wherein the total amount of the first heterophasic propylene copolymer (a), the second heterophasic propylene copolymer (b), ethylene based elastomer, the inoragnic filler and the additives is preferably at least 95 wt%, preferably at least 97 wt%, preferably at least 98.5 wt% and preferably at most 100 wt% based on the total amount of the polymer composition.

12. An automotive bumper comprising the polymer composition of any one of the previous claims, wherein the amount of the polymer composition is at least 95 wt%, preferably at least 98 wt% based on the total amount of the automotive bumper.

13. A process for the preparation of an article, comprising the sequential steps of:

- Providing the polymer composition of any one of the claims 1 to 11 obtained by extrusion;
- Shaping the polymer composition of any one of the claims 1 to 11 into the article, preferably by injection molding.

14. An article obtained or obtainable by the process according to claim 13, wherein the article is an automotive part, preferably an automotive bumper.

**Patentansprüche**

1. Polymerzusammensetzung, umfassend ein erstes heterophasisches Propylencopolymer (a), ein zweites heterophasisches Propylencopolymer (b) und ein Elastomer auf Ethylenbasis, wobei die Menge des ersten heterophasischen Propylencopolymers (a) im Bereich von 23,1 bis 73,7 Gew.-% liegt, basierend auf der Gesamtmenge der Polymerzusammensetzung, wobei die Menge des zweiten heterophasischen Propylencopolymers (b) im Bereich von 21,2 bis 64,5 Gew.-% liegt, basierend auf der Gesamtmenge der Polymerzusammensetzung, wobei die Menge des Elastomers auf Ethylenbasis im Bereich von 16,9 bis 27,6 Gew.-% liegt, basierend auf der Gesamtmenge der Polymerzusammensetzung,

wobei das erste heterophasische Propylencopolymer (a) Folgendes umfasst:

- 65 bis 81 Gew.-% eines Propylenpolymers (a1),
- 19 bis 35 Gew.-% eines Ethylen-$\alpha$-Olefin-Copolymers (a2), wobei die $\alpha$-Olefin-Einheit in dem Ethylen-$\alpha$-Olefin-Copolymer (a2) von mindestens einem $\alpha$-Olefin mit 3 bis 20 Kohlenstoffatomen abgeleitet ist,

wobei der MFI des ersten heterophasischen Propylencopolymers (a) im Bereich von 10 bis 100 dg/min liegt, bestimmt gemäß ISO1133-1:2011 bei 230 °C mit einer Last von 2,16 kg, wobei der in Xylol lösliche Anteil des zweiten heterophasischen Propylencopolymers (b) im Bereich von 12 bis 27 Gew.-% liegt, bestimmt gemäß ISO16152:2005, basierend auf der Gesamtmenge des zweiten heterophasischen Propylencopolymers (b), wobei die intrinsische Viskosität des in Xylol löslichen Anteils des zweiten heterophasischen Propylencopolymers (b) im Bereich von 2,9 bis 4,6 dl/g liegt, gemessen gemäß ISO1628-1:2009 in Decalin bei 135 °C; wobei der MFI des zweiten heterophasischen Propylencopolymers (b) im Bereich von 5,6 bis 65 dg/min liegt, bestimmt gemäß ISO1133-1:2011 bei 230 °C mit einer Last von 2,16 kg, wobei die Dichte des Elastomers auf Ethylenbasis im Bereich von 0,868 bis 0,943 g/cm3 liegt, bestimmt gemäß ASTM D792-13.

2. Polymerzusammensetzung nach Anspruch 1, wobei der MFI des zweiten heterophasischen Propylencopolymers (b) im Bereich von 7,1 bis 53 dg/min, bevorzugt im Bereich von 10,3 bis 39 dg/min, bevorzugter im Bereich von 12,5 bis 27 dg/min liegt, bestimmt gemäß ISO1133-1:2011 bei 230 °C mit einer Last von 2,16 kg.

3. Polymerzusammensetzung nach Anspruch 1 oder 2, wobei die Menge des ersten heterophasischen Propylencopolymers (a) im Bereich von 28,3 bis 54,8 Gew.-%, bevorzugt von 32,2 bis 44,7 Gew.-% liegt, basierend auf der Gesamtmenge der Polymerzusammensetzung.

4. Polymerzusammensetzung nach einem der vorstehenden Ansprüche, wobei die Menge des zweiten heterophasischen Propylencopolymers (b) im Bereich von 24,5 bis 50,1 Gew.-%, bevorzugt von 27,2 bis 40,1 Gew.-% liegt, basierend auf der Gesamtmenge der Polymerzusammensetzung.

5. Polymerzusammensetzung nach einem der vorstehenden Ansprüche, wobei der MFI des ersten heterophasischen Propylencopolymers (a) im Bereich von 15 bis 80 dg/min, bevorzugter von 23 bis 65 dg/min, besonders bevorzugt von 30 bis 50 dg/min liegt, bestimmt gemäß ISO1133-1:2011 bei 230 °C mit einer Last von 2,16 kg.

6. Polymerzusammensetzung nach einem der vorstehenden Ansprüche, wobei der MFI des Elastomers auf Ethylenbasis im Bereich von 0,20 bis 20,0 dg/min, bevorzugt von 1,3 bis 14,3 dg/min, bevorzugter von 2,6 bis 7,2 dg/min liegt, gemessen gemäß ASTM D1238-13 mit einer Last von 2,16 kg bei 190 °C.

7. Polymerzusammensetzung nach einem der vorstehenden Ansprüche, wobei das Elastomer auf Ethylenbasis ein Ethylen-Buten-Copolymer oder/und ein Ethylen-Octen-Copolymer ist, wobei das Elastomer auf Ethylenbasis bevorzugt ein Ethylen-Octen-Copolymer ist.

8. Polymerzusammensetzung nach einem der vorstehenden Ansprüche, wobei der MFI der Polymerzusammensetzung im Bereich von 5 bis 100 dg/min, bevorzugt von 10 bis 70 dg/min, bevorzugter von 15 bis 50 dg/min, bevorzugter von 15 bis 25 dg/min liegt, gemessen gemäß ISO1133-1:2011 mit einer Last von 2,16 kg bei 230 °C.

9. Polymerzusammensetzung nach einem der vorstehenden Ansprüche, wobei die Polymerzusammensetzung weiter einen anorganischen Füllstoff umfasst, wobei die Menge des anorganischen Füllstoffs höchstens 20 Gew.-%, höchstens 16 Gew.-%, bevorzugter höchstens 12 Gew.-% beträgt, basierend auf der Gesamtmenge der Polymerzusammensetzung.

10. Polymerzusammensetzung nach Anspruch 9, wobei der anorganische Füllstoff Talk ist.

11. Polymerzusammensetzung nach einem der vorstehenden Ansprüche, wobei die Polymerzusammensetzung weiter Additive umfasst, wobei die Gesamtmenge des ersten heterophasischen Propylencopolymers (a), des zweiten heterophasischen Propylencopolymers (b), des Elastomers auf Ethylenbasis, des anorganischen Füllstoffs und der Additive bevorzugt mindestens 95 Gew.-%, bevorzugt mindestens 97 Gew.-%, bevorzugt mindestens 98,5 Gew.% und bevorzugt höchstens 100 Gew.-% beträgt, basierend auf der Gesamtmenge der Polymerzusammensetzung.

12. Fahrzeugstoßfänger, umfassend die Polymerzusammensetzung nach einem der vorstehenden Ansprüche, wobei die Menge der Polymerzusammensetzung mindestens 95 Gew.-%, bevorzugt mindestens 98 Gew.-% beträgt, basierend auf der Gesamtmenge des Fahrzeugstoßfängers.

13. Verfahren für die Herstellung eines Gegenstands, umfassend die folgenden aufeinanderfolgenden Schritte:

- Bereitstellen der Polymerzusammensetzung nach einem der Ansprüche 1 bis 11, die durch Extrusion erhalten wird;
- Formen der Polymerzusammensetzung nach einem der Ansprüche 1 bis 11 zu dem Gegenstand, bevorzugt durch Spritzgießen.

14. Gegenstand, der durch den Prozess nach Anspruch 13 erhalten wird oder erhältlich ist, wobei der Gegenstand ein Fahrzeugteil, bevorzugt ein Fahrzeugstoßfänger ist.

**Revendications**

1. Composition polymère comprenant un premier copolymère de propylène hétérophasique (a), un second copolymère de propylène hétérophasique (b) et un élastomère à base d'éthylène, dans laquelle la quantité du premier copolymère de propylène hétérophasique (a) est comprise dans la plage allant de 23,1 à 73,7 % en poids sur la base de la quantité totale de la composition polymère, dans laquelle la quantité du second copolymère de propylène hétérophasique (b) est comprise dans la plage allant de 21,2 à 64,5 % en poids sur la base de la quantité totale de la composition polymère, dans laquelle la quantité d'élastomère à base d'éthylène est comprise dans la plage allant de 16,9 à 27,6 % en poids sur la base de la quantité totale de la composition polymère,

   dans laquelle le premier copolymère de propylène hétérophasique (a) comprend :

   - de 65 à 81 % en poids d'un polymère de propylène (a1),
   - de 19 à 35 % en poids d'un copolymère éthylène-$\alpha$-oléfine (a2), dans laquelle le fragment d'$\alpha$-oléfine dans le copolymère éthylène-$\alpha$-oléfine (a2) est dérivé d'au moins une $\alpha$-oléfine présentant de 3 à 20 atomes de carbone,

   dans laquelle le MFI du premier copolymère de propylène hétérophasique (a) est compris dans la plage allant de 10 à 100 dg/min tel que déterminé selon la norme ISO1133-1:2011 à 230 °C avec une charge de 2,16 kg, dans laquelle la partie soluble dans le xylène du second copolymère de propylène hétérophasique (b) est comprise dans la plage allant de 12 à 27 % tel que déterminé selon la norme ISO16152:2005 sur la base de la quantité totale du second copolymère de propylène hétérophasique (b), dans laquelle la viscosité intrinsèque de la partie soluble dans le xylène du second copolymère de propylène hétérophasique (b) est comprise dans la plage allant de 2,9 à 4,6 dl/g tel que mesuré selon la norme ISO1628-1:2009 dans la décaline à 135 °C; dans laquelle le MFI du second copolymère de propylène hétérophasique (b) est compris dans la plage allant de 5,6 à 65 dg/min tel que déterminé selon la norme ISO1133-1:2011 à 230 °C avec une charge de 2,16 kg, dans laquelle la densité de l'élastomère à base d'éthylène est comprise dans la plage allant de 0,868 à 0,943 g/cm$^3$ tel que déterminé selon ASTM D792-13.

2. Composition polymère selon la revendication 1, dans laquelle le MFI du second copolymère de propylène hétérophasique (b) est compris dans la plage allant de 7,1 à 53 dg/min, de préférence dans la plage allant de 10,3 à 39 dg/min, plus préférentiellement dans la plage allant de 12,5 à 27 dg/min, tel que déterminé selon la norme ISO1133-1:2011 à 230 °C avec une charge de 2,16 kg.

3. Composition polymère selon la revendication 1 ou 2, dans laquelle la quantité du premier copolymère de propylène hétérophasique (a) se trouve dans la plage allant de 28,3 à 54,8 % en poids, de préférence de 32,2 à 44,7 % en poids sur la base de la quantité totale de la composition polymère.

4. Composition polymère selon l'une quelconque des revendications précédentes, dans laquelle la quantité du second copolymère de propylène hétérophasique (b) est comprise dans la plage allant de 24,5 à 50,1 % en poids, de préférence de 27,2 à 40,1 % en poids sur la base de la quantité totale de la composition polymère.

5. Composition polymère selon l'une quelconque des revendications précédentes, dans laquelle le MFI du premier copolymère de propylène hétérophasique (a) est compris dans la plage allant de 15 à 80 dg/min, plus préférentiellement de 23 à 65 dg/min, le plus préférentiellement de 30 à 50 dg/min tel que déterminé selon la norme ISO1133-1:2011 à 230 °C avec une charge de 2,16 kg.

6. Composition polymère selon l'une quelconque des revendications précédentes, dans laquelle le MFI de l'élastomère à base d'éthylène est compris dans la plage allant de 0,20 à 20,0 dg/min, de préférence de 1,3 à 14,3 dg/min, plus préférentiellement de 2,6 à 7,2 dg/min, tel que mesuré selon la norme ASTM D1238-13 avec une charge de 2,16 kg à 190 °C.

7. Composition polymère selon l'une quelconque des revendications précédentes, dans laquelle l'élastomère à base d'éthylène est un copolymère d'éthylène-butène et/ou un copolymère d'éthylène-octène, de préférence l'élastomère à base d'éthylène est un copolymère d'éthylène-octène.

8. Composition polymère selon l'une quelconque des revendications précédentes, dans laquelle le MFI de la composition polymère est compris dans la plage allant de 5 à 100 dg/min, de préférence de 10 à 70 dg/min, plus préférentiellement de 15 à 50 dg/min, plus préférentiellement de 15 à 25 dg/min, tel que mesuré selon la norme ISO1133-1:2011 avec une charge de 2,16 kg à 230 °C.

9. Composition polymère selon l'une quelconque des revendications précédentes, dans laquelle la composition polymère comprend en outre une charge inorganique, dans laquelle la quantité de charge inorganique est d'au plus 20 % en poids, d'au plus 16 % en poids, plus préférentiellement d'au plus 12 % en poids sur la base de la quantité totale de la composition polymère.

10. Composition polymère selon la revendication 9, dans laquelle la charge inorganique est le talc.

11. Composition polymère selon l'une quelconque des revendications précédentes, dans laquelle la composition polymère comprend en outre des additifs, dans laquelle la quantité totale du premier copolymère de propylène hétérophasique (a), du second copolymère de propylène hétérophasique (b), de l'élastomère à base d'éthylène, de la charge inorganique et des additifs est de préférence au moins 95 % en poids, de préférence au moins 97 % en poids, de préférence au moins 98,5 % en poids et de préférence au plus de 100 % en poids sur la base de la quantité totale de la composition polymère.

12. Pare-chocs automobile comprenant la composition polymère selon l'une quelconque des revendications précédentes, dans lequel la quantité de la composition polymère est d'au moins 95 % en poids, de préférence d'au moins 98 % en poids sur la base de la quantité totale du pare-chocs automobile.

13. Processus de préparation d'un article, comprenant les étapes séquentielles consistant à :

    - fournir la composition polymère selon l'une quelconque des revendications 1 à 11 obtenues par extrusion ;
    - façonner la composition polymère selon l'une quelconque des revendications 1 à 11 en l'article, de préférence par moulage par injection.

14. Article obtenu ou pouvant être obtenu par le processus selon la revendication 13, dans lequel l'article est une pièce automobile, de préférence un pare-chocs automobile.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011144705 A1
- US 9023935 B2
- WO 2015091151 A1
- EP 2599829 A1
- US 5093415 A
- US 5017714 A
- US 5324820 A
- WO 2016198344 A

**Non-patent literature cited in the description**

- Handbook of Chemistry and Physics. CRC Press, 1989